# EUROPÄISCHE PATENTSCHRIFT

(11) **EP 2 855 974 B1**
(45) Veröffentlichungstag und Bekanntmachung des Hinweises auf die Patenterteilung: **22.02.2017**
(21) Anmeldenummer: 13734644.1
(22) Anmeldetag: 28.05.2013
(51) Int. Cl.: F16G 15/00, B66C 1/12

(54) **KETTENVERKÜRZUNGSELEMENT MIT SICHERUNGSMITTEL**
CHAIN SHORTENING ELEMENT WITH SECURING MEANS
ÉLÉMENT DE RACCOURCISSEMENT DE CHAÎNE COMPRENANT UN MOYEN DE BLOCAGE

(30) Priorität: 30.05.2012 DE 102012104655; 04.09.2012 DE 202012103371 U
(43) Veröffentlichungstag der Anmeldung: 08.04.2015
(73) Patentinhaber: Thiele GmbH & Co. KG, 58640 Iserlohn (DE)
(72) Erfinder: MATHES, Klaus, 58239 Schwerte (DE); NORPOTH, Bernhard, 45309 Essen (DE)
(74) Vertreter: Griepenstroh, Jörg
(86) Internationale Anmeldenummer: PCT/DE2013/100191
(87) Internationale Veröffentlichungsnummer: WO 2013/178219

(56) Entgegenhaltungen:
- WO-A1-97/23403
- WO-A1-2004/087553
- DE-A1- 2 633 092
- DE-U1- 20 015 557
- GB-A- 2 127 129

## Beschreibung

Die vorliegende Erfindung betrifft ein Kettenverkürzungselement für Gliederketten gemäß den Merkmalen im Oberbegriff von Anspruch 1.

Aus dem Stand der Technik ist es bekannt, Ketten für Hebe-, Zurr- und Zugarbeiten zu nutzen. Beispielsweise werden Ketten an Anschlagpunkten einer anzuhebenden Last befestigt, wobei anschließend die Last mittels eines Kranes angehoben wird. Hier sind Hebegeschirre bekannt, mit denen die Ketten universell für verschiedene Lasten jeweils individuell derart einstellbar sind, dass beispielsweise sowohl kürzere als auch längere Lasten bewegt werden können.

Um die jeweiligen Arbeitsvorbereitungen zum Bewegen von Lasten möglichst zeitlich gering zu halten, werden die Ketten, bei denen es sich insbesondere um Gliederketten, zumeist Rundstahlgliederketten, handelt, bevorzugt mit sogenannten Kettenverkürzungsklauen derart in ihrer Länge verändert, dass ein jeweiliges Kettenglied in eine Kettenverkürzungsklaue eingelegt wird und die Kette somit in ihrer Länge variiert. Bei Anheben der Last wird dann die Kette ab dem in der Kettenverkürzungsklaue eingelegten Kettenglied bis hin zu dem Anschlagpunkt auf Zug belastet, wobei der Teil, um den die Kette verkürzt ist, ohne Belastung an der Verkürzungsklaue bzw. an dem Hebegeschirr herunterhängt. Beispielsweise ist eine solche Verkürzungsklaue aus der DE 20 2004 002 161 U1 und DE8907877U1 bekannt.

Aus der DE 26 33 092 A1 ist ein Kettenverkürzungshaken für Rundstahlgliederketten bekannt. Dieser Kettenverkürzungshaken weist einen Kopfabschnitt, einen Mittelabschnitt und einen Kettenaufnahmeabschnitt auf. In dem Mittelabschnitt ist ein seitlicher Einführschlitz vorgesehen zum Einführen eines Kettengliedes, wobei sich an den Einführschlitz ein Längsschlitz anschließt. Der Längsschlitz erstreckt sich bis in den Kettenaufnahmeabschnitt und das eingeführte Kettenglied wird von dem Einführschlitz mit seinen Schenkeln in den Längsschlitz überführt und kommt in einem Tal des Längsschlitzes zur Auflage. Gegenüber dem Tal stehen seitlich Stütznocken zur zusätzlichen Abstützung des in dem Längsschlitz aufgenommenen Kettenglieds ab. In dem Einführschlitz ist ein Sicherungsmittel angeordnet.

Ferner sind aus der WO 2004/087553 A1 und der GB 2 127 129 A jeweils Kettenverkürzungselemente bekannt, bei welchen ein Kettenglied in einen Längsschlitz einführbar ist, um bei Erreichen der erwünschten Verkürzungslänge den verbleibenden Kettenstrang zu fixieren.

Aufgabe der vorliegenden Erfindung ist es daher, ausgehend vom Stand der Technik ein Kettenverkürzungselement bereit zu stellen, das besonders leicht handhabbar ist und bei dem ein Herausrutschen der Kette aus der Verkürzungsposition unterbunden wird.

Die zuvor genannte Aufgabe wird mit einem Kettenverkürzungselement für Gliederketten gemäß den Merkmalen im Patentanspruch 1 gelöst.

Vorteilhafte Ausführungsvarianten der vorliegenden Erfindung sind Bestandteil der abhängigen Patentansprüche.

Das Kettenverkürzungselement für Gliederketten weist einen Kopfabschnitt, einen Mittelabschnitt und einen Kettenaufnahmeabschnitt auf, wobei in dem Mittelabschnitt eine Öffnung zur Durchführung einer Kette vorgesehen ist und sich von der Öffnung aus ein Längsschlitz in den Kettenaufnahmeabschnitt erstreckt, wobei ein stehendes Kettenglied mit seinen Schenkeln in den Längsschlitz einführbar ist und auf mindestens einer Seite in dem Kettenaufnahmeabschnitt eine Tasche zur zumindest teilweisen Aufnahme eines liegenden Kettenglieds angeordnet ist. Bei dem Kettenverkürzungselement ist in einem Tal des Längsschlitzes ein Stütznocken ausgebildet, wobei der Stütznocken das stehende Kettenglied abstützt und zumindest bereichsweise in die Tasche hineinragt und in den Längsschlitz ein Sicherungsmittel hineinragend ausgebildet ist, wobei das Sicherungsmittel einen Schenkel des stehenden Kettenglieds zumindest bereichsweise übergreift.

Hierdurch ist es für einen anwendenden Monteur in besonders einfacher Weise möglich, eine zu verkürzende Kette durch die Öffnung des Mittelabschnitts zu ziehen und bei Erreichen der gewünschten Länge ein entsprechend stehendes Kettenglied in den Längsschlitz einzuführen und bis auf das Tal des Längsschlitzes herunterzudrücken. Die jeweils an das stehende Kettenglied angrenzenden liegenden Kettenglieder kommen dann in einer jeweiligen Tasche zur Auflage, wobei auf mindestens einer Seite, bevorzugt auf beiden Seiten jeweils ein Stütznocken bis in die Tasche hineinragt.

Weiterhin ist der Stütznocken mit einem Abstand a in die Tasche hineinragend ausgebildet, bzw. gegenüber der Tasche überstehend ausgebildet ist, wobei der Abstand a mindestens dem halben Querschnittsdurchmesser eines Kettengliedes entspricht. Hierdurch wird sichergestellt, dass der in dem Längsschlitz aufgenommene Schenkel insbesondere in Verbindung mit den abgerundeten Kanten des Längsschlitzes derart lagefixiert ist, dass der Stütznocken an dem Schenkel derart über die Tasche überstehend ausgebildet ist, dass die von dem stehenden Kettenglied aufgenommene Rundung des liegenden Kettengliedes im Wesentlichen in Zugrichtung vollständig über den Stütznocken abgestützt ist. Hierdurch erhöhen sich die Zugbelastbarkeit sowie die Dauerhaltbarkeit des erfindungsgemäßen Verkürzungselementes sowie der mit dem Verkürzungselement verkürzten Kette erheblich.

Damit das stehende Kettenglied gegen ein ungewolltes Herausrutschen aus dem Längsschlitz gesichert ist, ist ein Sicherungsmittel in den Längsschlitz hineinragend ausgebildet, wobei bei Einführen des stehenden Kettenglieds in den Längsschlitz mindestens ein, insbesondere der in dem Tal zur Anlage kommende Schenkel das Sicherungsmittel passiert. Bei dem Sicherungsmittel handelt es sich insbesondere um einen formschlüssigen Eingriff, wobei der formschlüssige Eingriff entweder durch eine Kraft überwunden wird oder aber gezielt im Fall eines Sicherungsbolzen oder aber Sicherungshebels durch eine Entriegelungsbewegung gegen die Sicherungswirkung überwunden werden kann.

Hierzu ist insbesondere das Sicherungsmittel als federnd gelagerte Kugel ausgebildet, wobei die Kugel zumindest abschnittsweise in den Längsschlitz hineinragt und zum Einlegen bzw. Einführen des stehenden Kettenglieds in den Längsschlitz entgegen einer Federkraft in Richtung eines Seitenschenkels des Kettenaufnahmeabschnitts bewegbar ist. Insbesondere ist auf den sich gegenüberliegenden, den Längsschlitz berandenden zwei Seitenschenkeln des Kettenaufnahmeabschnitts jeweils mindestens eine Kugel als Sicherungsmittel angeordnet. Im Rahmen der Erfindung ist es auch möglich, jedweden anderen Körper, beispielsweise eine Ellipse oder aber auch einen linsenartigen Körper durch eine Federkraft zumindest bereichsweise in den Längsschlitz hineinragen zu lassen, wobei bei Einführen des stehenden Kettenglieds mindestens ein Schenkel des stehenden Kettenglieds die Kugel oder aber den Körper passiert und entgegengesetzt der Federkraft in Richtung des Seitenschenkels hineindrückt, wobei nach Passieren der jeweilige Körper durch die Federkraft wieder in die Sicherungsposition gedrückt wird. Zur Entnahme des stehenden Kettenglieds aus dem Längsschlitz ist es somit nötig, ein Kraftniveau zu überschreiten, was beispielsweise nur durch ein gewolltes Entnehmen der Kette aus dem Längsschlitz durch einen anwendenden Monteur erfolgen kann. Ein ungewolltes Herausspringen des stehenden Kettenglieds wird hierdurch vermieden.

Im Rahmen der Erfindung ist weiterhin bevorzugt die auf die Kugel ausgeübte Federkraft einstellbar, insbesondere ist das Sicherungsmittel als Kugeldruckstift ausgebildet. Hierbei ist es beispielsweise möglich, eine Bohrung in den Seitenschenkel des Kettenaufnahmeabschnitts von außen her durchzuführen, wobei das Ende der Bohrung durchgängig zu dem Längsschlitz ist, sich jedoch im Bereich des Längsschlitzes zumindest minimal verjüngt und somit ein Widerlager für die Kugel oder aber den Körper bildet, so dass dieser nicht in den Längsschlitz hineinfällt. Damit die Kugel oder aber der Körper in dieser Position gehalten werden, wird anschließend von außen eine Druckfeder, insbesondere eine Spiraldruckfeder, eingeführt und beispielsweise mit einer Madenschraube formschlüssig von außen gekoppelt. Durch weiteres Hineindrehen der Madenschraube ist die Vorspannkraft der Druckfeder erhöhbar. Bei herausgedrehter Madenschraube ist die Sicherungswirkung verringerbar.

Im Rahmen der Erfindung ist es jedoch ebenfalls möglich, eine durchgängige Bohrung von außen durch den gesamten Seitenschenkel bis in den Teilbereich hinein durchzuführen und anschließend in dieser Bohrung einen Kugeldruckstift anzuordnen. Durch weiteres Einschrauben des gesamten Kugeldruckstiftes, so dass die Kugel stärker in den Längsschlitz hineinragt, kann auch wiederum die Intensität der Sicherungskraft, die durch den Kugeldruckschrift ausgeübt wird, eingestellt werden.

In einer weiteren bevorzugten Ausführungsvariante ist das Sicherungsmittel als Sperrhebel ausgebildet, wobei ein Sperrfortsatz des Sperrhebels in den Längsschlitz hineinragt, insbesondere ragt der Sperrfortsatz zwischen 40 und 70 %, insbesondere zwischen 50 und 65 % die Breite des Längsschlitzes überdeckend in diesen hinein.

Ein Sperrhebel ist im Rahmen der Erfindung insbesondere ein Sicherungsstift, der analog dem Prinzip eines Kugeldruckstifts in axialer Richtung entgegengesetzt einer Federkraft verschiebbar ist und in seiner Sicherungsposition einen formschlüssigen Eingriff mit dem stehenden Kettenglied bildet. Insbesondere überdeckt der Sperrfortsatz den in dem Tal liegenden Schenkel des stehenden Kettenglieds. Hierbei hat es sich als besonders vorteilhaft erwiesen, dass bei einem selbst entriegelnden Einlegen des stehenden Kettenglieds und der damit erreichten Sicherungswirkung durch formschlüssiges Überdecken des Sperrfortsatzes des Schenkels des stehenden Kettenglieds eine Überdeckung stattfindet, die im Bereich zwischen 40 und 70 %, insbesondere zwischen 50 und 65 % der Breite des Längsschlitzes liegt. Zum Entriegeln muss dann der Sperrhebel in axialer Richtung gegenüber dem Längsschlitz nach außen verschoben werden und gibt den Schenkel des stehenden Kettenglieds derart frei, dass das Kettenglied in Richtung zu dem Mittelabschnitt aus dem Längsschlitz entnehmbar ist. Im Anschluss daran, nach Loslassen des Sperrhebels, erfolgt eine automatische Rückführung in die Sicherungsposition aufgrund der Federkraft.

Damit ebenfalls eine einfache Montage und bei Defekt oder aber Verschleiß des Sperrhebels ein Austausch möglich ist, ist insbesondere der Sperrhebel in einer Hülse federnd gelagert, wobei die Hülse in die Bohrung des Seitenschenkels eingeführt wird und sodann der Sperrhebel insbesondere der Sperrhebelfortsatz relativbeweglich zu der Hülse ausgebildet ist. Die Bohrung in dem Seitenschenkel selbst kann dabei derart ausgebildet sein, dass sie verschiedene Durchmesser aufweist, so dass ein versehentlich zu weites Einschieben der Hülse durch einen formschlüssigen Versatz der Bohrung des Seitenschenkels verhindert wird.

Im Rahmen der Erfindung wird insbesondere der Sperrhebel in einer Sicherungsstellung durch das Einführen des stehenden Kettenglieds zurückbewegt, bis der untere Schenkel des stehenden Kettenglieds den Sperrfortsatz passiert hat, woraufhin der Sperrhebel aufgrund der Federkraft wieder zurück in die Sperrstellung überführbar ist. Hierbei übergreift dann der Sperrfortsatz den unteren Schenkel des stehenden Kettenglieds formschlüssig in der Sperrstellung. Insbesondere ist hierzu der Sperrfortsatz abgeschrägt, so dass durch die Einführbewegung und den formschlüssigen Kontakt während des Einführvorgangs des stehenden Kettenglieds in den Längsschlitz aufgrund der Abschrägung des Sperrfortsatzes und der Außenmantelfläche des Schenkels des stehenden Kettenglieds ein Zurückdrücken des Sperrhebels entgegengesetzt der Federkraft ermöglicht wird.

Insbesondere ist der Sperrfortsatz mit einer abgeschrägten Fläche von im Wesentlichen 45° zu einer Mittellängsebene des Längsschlitzes ausgebildet.

Weiterhin bevorzugt ist der Sperrhebel als Sperrstift mit im Wesentlichen hierzu um 90° versetzt angeordnetem Betätigungshebel ausgebildet. Der Sperrhebel ist insbesondere derart konstruktiv ausgelegt, dass er immer wieder in die Sperrposition zurück gleitet und nicht außerhalb einer Sperrposition arretierbar ist. Hierdurch wird sichergestellt, dass der Sperrhebel immer in die Sperrposition zurückfährt und somit ein versehentliches Abspringen des stehenden Kettenglieds aus dem Längsschlitz gänzlich unterbunden wird.

Damit der Sperrhebel eine besonders anwenderfreundliche Betätigung aufweist, die durch einen anwendenden Monteur auch mit Arbeitshandschuhen durchführbar ist, ist der Sperrhebel insbesondere derart ausgebildet, dass er um die Mittellängsachse des Sperrstiftes in der Hülse drehbar angeordnet ist. Ein Ende der Hülse sowie ein Teil des Betätigungshebels sind dabei formschlüssig aneinander liegend und kontaktieren sich in einer Kontaktebene, wobei die Kontaktebene in einem Winkel zwischen 30° und 60°, insbesondere in einem Winkel von 45° zu der Mittellängsachse des Sperrstifts angeordnet ist. Durch links- oder aber rechtsseitige Drehung erfolgt somit ein Verschieben der Kontaktfläche des Betätigungshebels sowie der Kontaktfläche der Hülse zueinander, so dass der Sperrhebel hierdurch in axialer Richtung aus der Hülse herausgedreht wird. Nach Loslassen des Betätigungshebels erfolgt aufgrund der Federkrafteinwirkung ein automatisches Zurückdrehen in die Sperrposition.

Insbesondere steht der Stütznocken gegenüber einer Seite des Kettenverkürzungselementes über. Unter einer Seite ist im Rahmen der Erfindung insbesondere eine Vorderseite bzw. eine Rückseite der Kettenverkürzungselemente zu verstehen. Ganz besonders bevorzugt ist an dem Kettenverkürzungselement in dem Kettenaufnahmeabschnitt, an einer Vorderseite eine Tasche ausgebildet und spiegelsymmetrisch hierzu an einer Rückseite ebenfalls eine Tasche ausgebildet, wobei sich der Stütznocken dann von der Vorderseite zu der Rückseite analog einem Joch erstreckend ausgebildet ist. Der Stütznocken stützt somit das in dem Längsschlitz aufgenommene stehende Kettenglied an seinem Schenkel an einer Unterseite ab, so dass die jeweils an der Vorderseite und Hinterseite angrenzenden liegenden Kettenglieder zumindest abschnittsweise in der Tasche zur Anlage kommen, wobei die in dem stehenden Kettenglied aufgenommenen Rundungen der jeweils liegenden Kettenglieder von dem Stütznocken abgestützt sind.

Ein besonderer Vorteil ist, dass der an zumindest einer Seite des Kettenverkürzungselementes ausgebildete Stütznocken den Schenkel des Kettengliedes derart abstützt, dass die Rundung des in der Tasche zumindest abschnittsweise aufliegenden Kettengliedes bezogen auf die Richtung der Erdanziehungskraft mit abgestützt ist. Hierdurch wird insbesondere die Dauerhaltbarkeit des erfindungsgemäßen Kettenverkürzungselementes erhöht, wobei das stehende Kettenglied mit seinen Schenkeln in dem Längsschlitz gehalten wird. Durch diese Maßnahme ist es insgesamt möglich die Handhabbarkeit des erfindungsgemäßen Kettenverkürzungselementes zu vereinfachen, das Eigengewicht des Kettenverkürzungselementes zu senken und gleichzeitig die Dauerhaltbarkeit insbesondere die Dauerhaltbarkeit einer Kette, die eine Biegebeanspruchung erfährt, zu steigern.

Weiterhin bevorzugt ist die Tasche in dem Kettenaufnahmeabschnitt insbesondere derart ausgebildet, dass sie in einem Winkel zwischen 10° und 20°, insbesondere in einem Winkel zwischen 13° und 17° und bevorzugt in einem Winkel von 15° zu einer Mittellängsebene des Kettenverkürzungselements abstehend angeordnet ist. Der Kettenaufnahmeabschnitt ist somit in einem unteren Fußbereich sich verbreiternd ausgebildet, wobei die Verbreiterung selbst durch die Winkellage der Tasche hervorgerufen ist. Wird nun eine Last auf das erfindungsgemäße Kettenverkürzungselement aufgebracht, wobei die Last im Wesentlichen in Richtung der Mittellängsebene auf die Kette als Zuglast aufgebracht wird, so wird der verkürzte Abschnitt der Kette durch das in dem Längsschlitz stehende Kettenglied, welches im Talbereich des Längsschlitzes und über den Stütznocken abgestützt ist, gehalten.

Damit das in dem Längsschlitz aufgenommene Kettenglied nicht aus diesem bei einer Entlastung oder aber auch ungewollt herausrutschen kann, ist zusätzlich ein Sicherungsbolzen in dem Längsschlitz derart zum Eingriff kommend angeordnet, dass nur nach Entriegelung des Sicherungsbolzens eine Herausnahme des stehenden Kettengliedes aus dem Längsschlitz möglich ist. Hierzu ist insbesondere der Sicherungsbolzen über die Federkraft eines Federmittels in der Sicherungsposition gehalten, wobei bei Betätigung des Sicherungsbolzens entgegen der Federkraft eine Entriegelung erfolgt und somit das stehende Kettenglied aus dem Längsschlitz herausnehmbar ist. Im Rahmen der Erfindung kann das Sicherungselement auch wie zuvor beschrieben als Kugeldruckstift oder aber als Sperrhebel ausgebildet sein.

Weiterhin besonders bevorzugt ist das Kettenverkürzungselement derart ausgebildet, dass sich der Mittelabschnitt zu dem Kettenaufnahmeabschnitt in Querschnittsansicht fächerartig erstreckt. Hierdurch ist es insbesondere möglich ein Kettenverkürzungselement bereitzustellen, das zwei Taschen aufweist, also eine Tasche an einer Vorderseite und an einer Rückseite des Kettenverkürzungselementes, so dass das jeweils an das stehende Kettenglied angrenzend liegende Kettenglied zumindest abschnittsweise in der jeweiligen Tasche der Vorderseite bzw. Rückseite aufgenommen ist.

In einer weiteren bevorzugten Ausführungsvariante sind an den Rändern des Längsschlitzes Ausnehmungen ausgebildet, insbesondere sind die Ausnehmungen der Ränder des Längsschlitzes abgerundet. Hierdurch ist es möglich über den Längsschlitz die Schenkel des in dem Längsschlitz aufgenommenen stehenden Kettengliedes zu führen, wobei die Bögen der jeweils an das stehende Kettenglied angrenzend liegenden Kettenglieder jeweils in den Ausnehmungen, insbesondere in den runden Ausnehmungen geführt sind. Insbesondere ist hierzu das Kettenverkürzungselement derart dimensioniert, dass der Längsschlitz in Verbindung mit den Ausnehmungen, insbesondere den abgerundeten Ausnehmungen eine Tiefe aufweist, die den Abstand eines Bogens eines liegenden Kettengliedes zu dem Abstand des Bogens des nächstliegenden Kettengliedes entspricht. Hierdurch wird die mittels des stehenden Kettengliedes in das Kettenverkürzungselement eingelegte Kette optimal formschlüssig lagefixiert.

In einer weiteren bevorzugten Ausführungsvariante ist unterhalb des Stütznockens eine Aufnahmemulde ausgebildet, wobei die Aufnahmemulde das auf das in der Tasche liegende Kettenglied folgende stehende Kettenglied in Zugrichtung zumindest abschnittsweise mit dessen Rundung aufnimmt. Das auf das in der Tasche liegende Kettenglied folgende stehende Kettenglied liegt somit mit seiner Rundung zumindest abschnittsweise in der Aufnahmemulde an, wodurch wiederum eine sichere Lagefixierung des Kettengliedes erfolgt.

Im Rahmen der Erfindung ist ferner der Kopfabschnitt des Kettenverkürzungselementes als Kettenaufnahmeabschnitt ausgebildet oder in dem Kopfabschnitt ist ein Anbindungsbereich zum Koppeln mit einer Kette oder einem anderen Hebe- oder Zug- oder Zurrgeschirr vorgesehen. Im Falle des Kettenaufnahmeabschnittes ebenfalls im Kopfabschnitt, ist das Kettenverkürzungselement vollständig spiegelsymmetrisch ausgebildet. Somit ist sowohl an der Kopfseite als auch an der Fußseite jeweils ein Kettenaufnahmeabschnitt bestehend aus Längsschlitz sowie Stütznocken und Tasche ausgebildet, so dass das Kettenverkürzungselement beidseitig einsetzbar ist.

Im Rahmen der Erfindung ist es jedoch auch alternativ möglich, den Kopfbereich derart auszubilden, dass er beispielsweise als Einheitsgabelkopf ausgebildet ist, oder aber auch als Doppelgabel bzw. H-förmiger Kopf. Im Rahmen der Erfindung ist jedoch auch möglich einen Ringgabelanschluss vorzusehen. Hierdurch ist es möglich das erfindungsgemäße Kettenverkürzungselement für ein vielfaches Einsatzspektrum zu konzipieren, wobei insbesondere das Kettenverkürzungselement als Schmiedeteil aus einem metallischen, insbesondere aus einem Stahlwerkstoff ausgebildet ist.

Weitere Vorteile, Merkmale, Eigenschaften und Aspekte sind Bestandteil der nachfolgenden Beschreibung. Bevorzugte Ausführungsvarianten werden in den schematischen Figuren dargestellt. Diese dienen dem einfachen Verständnis der Erfindung. Es zeigen:
- Figur 1a und b: eine Vorderansicht und eine perspektivische Ansicht eines Verkürzungselementes mit Einheitsgabelkopf,
- Figur 2: eine Seitenperspektive eines Verkürzungselementes mit Einheitsgabelkopf und Anschlagmitteln,
- Figur 3a und b: ein Doppelverkürzungselement in einer perspektivischen Ansicht und einem Teilschnitt mit Sicherungsbolzen,
- Figur 4: ein Doppelverkürzungselement mit zwei Ketten im Eingriff,
- Figur 5: eine Querschnittsansicht eines Kettenaufnahmeabschnittes mit eingehängter Kette,
- Figur 6a und b: zwei weitere Querschnittsansichten eines Kettenverkürzungselementes mit H-förmigem Doppelgabelkopf,
- Figur 7: eine perspektivische Ansicht des Kettenverkürzungselementes mit H-förmigem Doppelgabelkopf,
- Figur 8a und b: einen erfindungsgemäßen Sicherungsbolzen in einer Seitenansicht und einer Querschnittsansicht
- Figur 9a und b: ein erfindungsgemäßes Kettenverkürzungselement mit Kugeldruckstiften in Querschnittsansicht und Seitenansicht,
- Figur 10a bis d: ein erfindungsgemäßes Kettenverkürzungselement in einer Querschnittansicht und einer Seitenansicht mit einem Sperrhebel,
- Figur 11a bis e: einen erfindungsgemäßen Sperrhebel in verschiedenen Ansichten in Sperrstellung und
- Figur 12a bis: e den Sperrhebel in Offenstellung.

In den Figuren werden für gleiche oder ähnliche Bauteile dieselben Bezugszeichen verwendet, auch wenn eine wiederholte Beschreibung aus Vereinfachungsgründen entfällt.

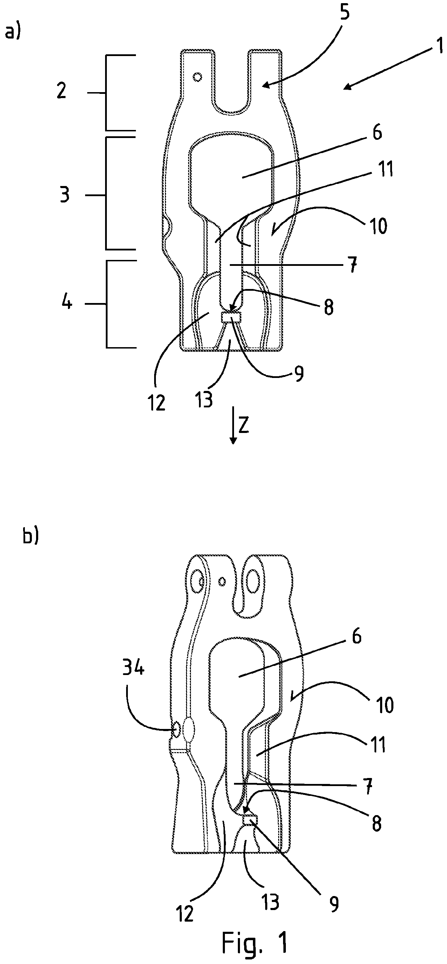

Figur 1a und b zeigen ein erfindungsgemäßes Kettenverkürzungselement 1 in einer Draufsicht und einer perspektivischen Ansicht. Das Kettenverkürzungselement 1 weist hierzu einen Kopfabschnitt 2, einen Mittelabschnitt 3 und einen Kettenaufnahmeabschnitt 4 auf. Der Kopfabschnitt 2 ist hier dargestellt als Doppelgabel 5 ausgebildet, wobei durch Einschieben eines nicht näher dargestellten Verbindungsbolzens es möglich ist das Kettenverkürzungselement 1 an eine ebenfalls nicht näher dargestellte Kette oder ähnliches zu koppeln und den Verbindungsbolzen mittels eines Spannstifts zu sichern.

In dem Mittelabschnitt 3 ist eine Öffnung 6 vorhanden, wobei durch die Öffnung 6 die in Figur 1a und b zu verkürzende Kette geführt wird. Ist das Kettenglied erreicht, bis auf dessen Länge die Kette gekürzt werden soll, so wird dieses Ketteglied als stehendes Kettenglied in einen Längsschlitz 7 eingeführt, so dass es in einem Tal 8 des Längsschlitzes 7 zur Auflage kommt. Erfindungsgemäß ist in dem Tal 8 beidseitig ein Stütznocken 9 vorgesehen, wobei der Stütznocken 9 gegenüber dem Längsschlitz 7 und einer hier dargestellten Vorderseite 10 des Kettenverkürzungselementes 1 vorstehend ausgebildet ist. Damit das Kettenglied in den Längsschlitz 7 einführbar ist, weist dieser an seinen Rändern Ausnehmungen 11 auf, wobei in den Ausnehmungen 11 die Bögen des jeweils in dem Längsschlitz 7 aufgenommenen stehenden Kettenglieds benachbarten liegenden Kettenglieder während des Einführvorganges formschlüssig zur Anlage kommen.

Ferner sind in dem Kettenaufnahmeabschnitt 4 Taschen 12 ausgebildet, wobei in den Taschen 12 das in Zugrichtung Z zum stehenden Kettenglied benachbarte liegende Kettenglied liegend zumindest abschnittsweise aufgenommen wird. Unterhalb der Stütznocken 9 sind ferner Aufnahmemulden 13 vorgesehen, wobei in den Aufnahmemulden 13 das in Zugrichtung Z auf das liegende Kettenglied folgende nächste stehende Kettenglied mit seinem Bogen zumindest bereichsweise aufgenommen ist.

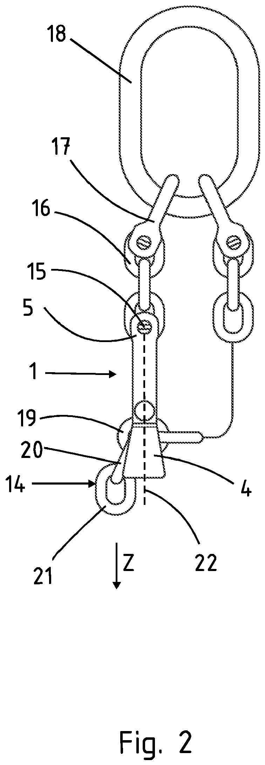

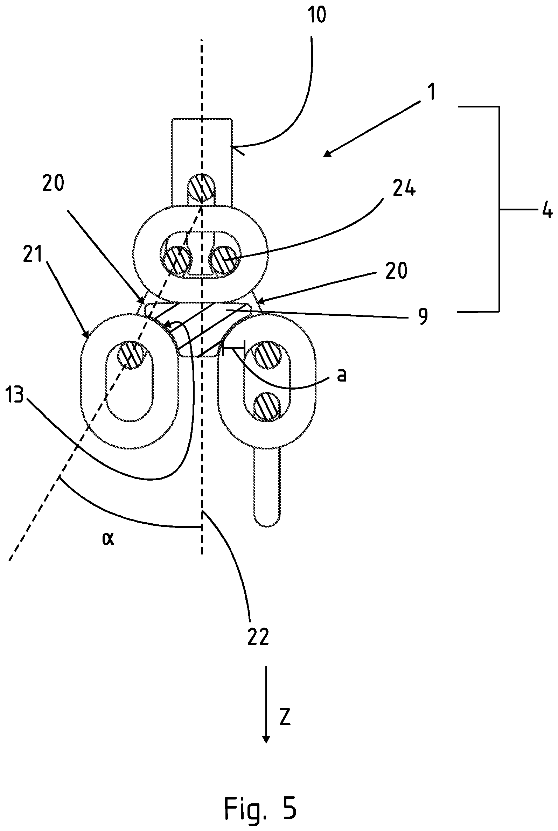

Figur 2 zeigt das Kettenverkürzungselement 1 gemäß Figur 1 mit einer zu verkürzenden Kette 14 im Einsatz. Hierbei ist an der oberen Doppelgabel 5 ein Verbindungsbolzen 15 eingesetzt, wobei in dem Verbindungsbolzen 15 eine Anschlagkette 16 gesichert ist. Die Anschlagkette 16 ist mittels einer Ringgabel 17 an eine Anschlagöse 18 gekoppelt. In dem Kettenaufnahmeabschnitt 4 ist ein stehendes Kettenglied 19 aufgenommen und in der Tasche 12 liegt ein in Zugrichtung Z auf das stehende Kettenglied 19 folgende liegende Kettenglied 20 auf. Auf das liegende Kettenglied 20 folgt wiederum ein stehendes Kettenglied 21, das zumindest abschnittsweise in der nicht näher dargestellten Aufnahmemulde zur Anlage kommt. Zu erkennen ist, dass das liegende Kettenglied 20 mit einem Winkel zu einer Mittellängsebene 22 des Kettenverkürzungselementes 1 angeordnet ist, wobei dies näher in Figur 5 beschrieben wird.

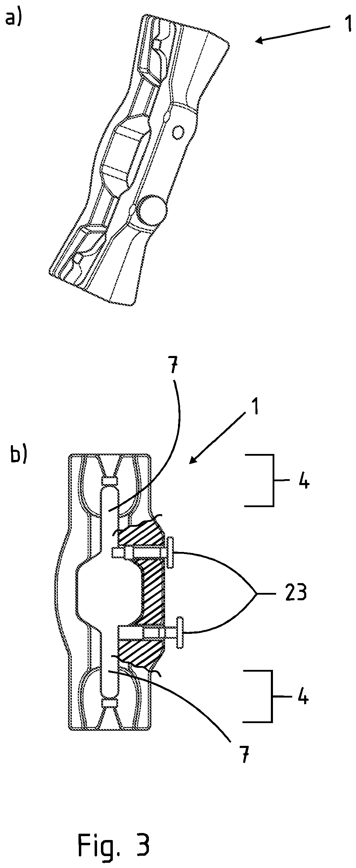

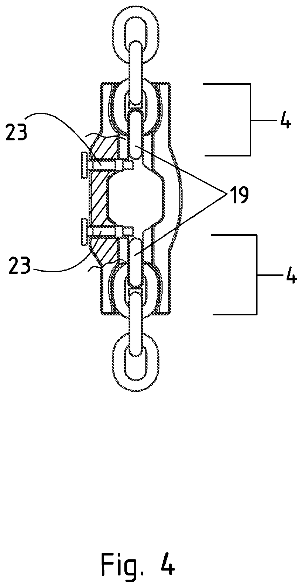

Figur 3a und b sowie Figur 4 zeigen ein Kettenverkürzungselement 1, ausgeführt als Doppelverkürzungselement. Dies bedeutet, dass sowohl kopfseitig als auch fußseitig jeweils ein Kettenaufnahmeabschnitt 4 ausgebildet ist. Ferner dargestellt ist in Figur 4 das jeweils in dem Kettenaufnahmeabschnitt 4 aufgenommene stehende Kettenglied 19 mittels eines Sicherungsbolzens 23 gesichert ist. Der Sicherungsbolzen 23 ist in Figur 3b dargestellt auf die Bildebene bezogen in der oberen Position in einer Sicherungsstellung und in der unteren Position in einer Öffnungsstellung dargestellt. Ist der Sicherungsbolzen 23 in der Sicherungsstellung, so greift er zumindest abschnittsweise in den Längsschlitz 7 ein und hindert gemäß Figur 4 das jeweils stehende Kettenglied 19 an einem Herausnehmen oder aber Herausrutschen aus dem Längsschlitz 7.

Figur 5 zeigt ferner einen bereichsweisen Querschnitt des Kettenverkürzungselementes 1, insbesondere durch den Kettenaufnahmeabschnitt 4. Gut zu erkennen ist, dass der Stütznocken 9 gegenüber der Vorderseite 10 mit einem Abstand a vorstehend ausgebildet ist. Im Wesentlichen ist der Stütznocken 9 derart gegenüber der Vorderseite 10 überstehend ausgebildet, dass der Querschnittsdurchmesser 24 des liegenden Kettengliedes 20 in Zugrichtung Z von dem Stütznocken 9 untergriffen ist. Ferner dargestellt ist auf die Bildebene bezogen linken Seite dargestellt, dass das liegende Kettenglied 20, welches in der Tasche 12 zumindest abschnittsweise zur Auflage kommt in einem Winkel α zu der Mittellängsebene 22 des Kettenverkürzungselementes 1 angeordnet ist. Ebenfalls erkennbar ist, dass das auf das liegende Kettenglied 20 in Zugrichtung Z folgende stehende Kettenglied 21 in der Aufnahmemulde 13 zumindest bereichsweise mit einer Außenrundung aufgenommen ist.

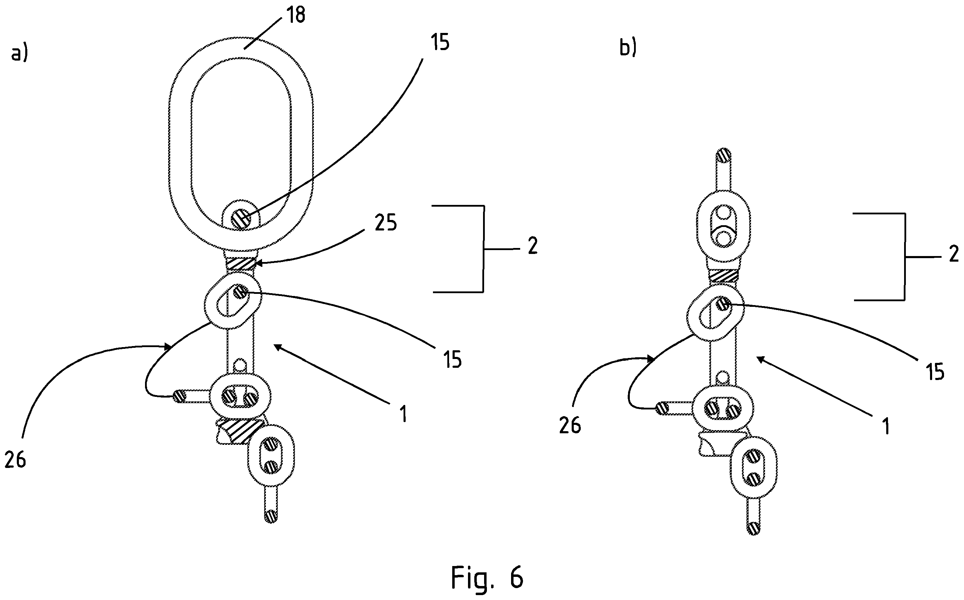

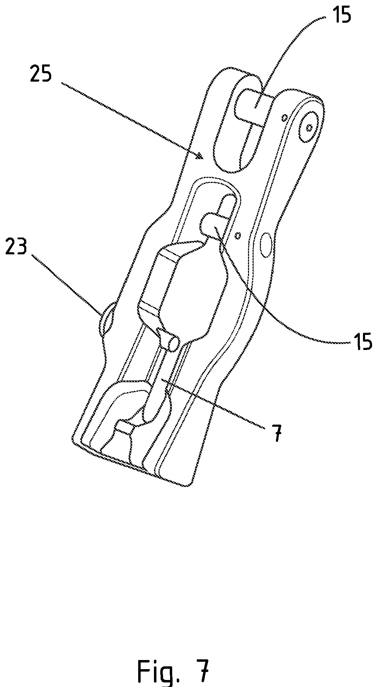

Ferner dargestellt ist in Figur 6a und b und 7 das Kettenverkürzungselement 1 mit einem jeweiligen H-förmigen Doppelgabelkopf 25. Hierdurch wird es zum einen möglich, den zu verkürzenden Teil der Kette 26 mit einem Verbindungsbolzen 15 an das Kettenverkürzungselement 1 zu koppeln, zum anderen mit einem weiteren Verbindungsbolzen 15 ein Aufhängeglied 18 aufzunehmen oder wie in Figur 6b die Verbindung zu einer Anschlagkette herzustellen. Ferner dargestellt ist in Figur 7 der Sicherungsbolzen 23, der zumindest bereichsweise in dem Bereich des Längsschlitzes 7 hineinragend ausgebildet ist.

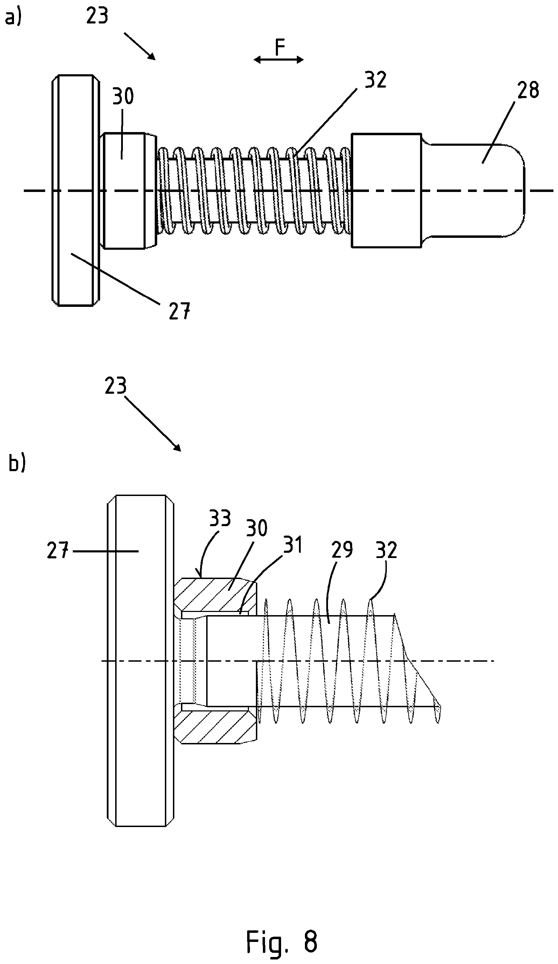

Figur 8a und b zeigen ferner den Sicherungsbolzen 23 in einer Seitenansicht und in einer Querschnittsansicht im Detail. Der Sicherungsbolzen 23 weist einen Griff 27 auf, so dass er von einem anwendenden Monteur mit den Fingern handhabbar ist. Ferner weist der Sicherungsbolzen 23 einen Sicherungsfuß 28 auf der auf einen Schafft 29 des Sicherungsbolzens 23 aufgepresst ist. Ebenfalls weist der Sicherungsbolzen 23 eine Hülse 30 auf, wobei zwischen der Hülse 30 und dem Schafft 29 ein Spiel 31 ausgebildet ist, so dass der Schafft 29 innerhalb der Bundmutter 30 bewegbar ist.

Zwischen dem Sicherungsfuß 28 und der Bundmutter 30 ist eine Feder 32 angeordnet, die den Bolzen in der in Figur 8a dargestellten Position aufgrund der Federkraft F hält. Hierdurch ragt der Sicherungsfuß 28 nicht näher dargestellt in den jeweiligen Längsschlitz ein.

Zur Montage wird der Sicherungsbolzen 23 mit einer Außenmantelfläche 33 der Hülse 30 in eine in Figur 1b dargestellte Montageöffnung 34 eingepresst. Nun ist es möglich in Richtung der Federkraft F über den Griff 27 den Sicherungsfuß 28 aus dem Längsschlitz 7 herauszuziehen, das stehende Kettenglied 19 einzuführen bzw. aus dem Längsschlitz herauszunehmen und anschließend durch Loslassen des Griffes 27 gelangt der Sicherungsfuß 28 aufgrund der Federkraft wieder in den Bereich des Längsschlitzes.

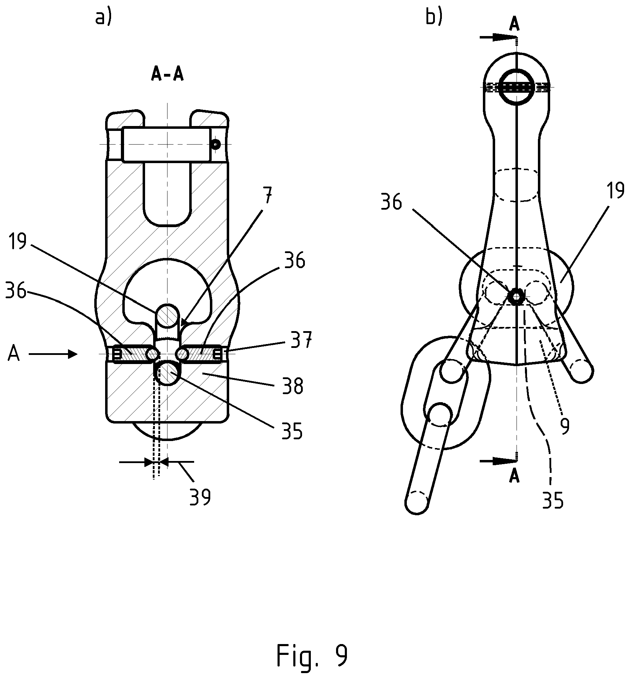

Figur 9a und b zeigen ein erfindungsgemäßes Kettenverkürzungselement 1 mit in einem Längsschlitz 7 eingesetztem stehenden Kettenglied 19. Das stehende Kettenglied 19 ist dabei mit seinem unteren Schenkel 35 auf dem Stütznocken 9 aufliegend, wobei der Schenkel 35 beiderseitig innerhalb des Längsschlitzes 7 formschlüssig von jeweils einem Kugeldruckstift 36 übergriffen wird. Ein jeweiliger Kugeldruckstift 36 ist dabei in einer Bohrung 37 eines Seitenschenkels 38 eingeschraubt, wobei der Kugeldruckstift 36 nach dem Prinzip einer Madenschraube innerhalb der Bohrung 37 in Axialrichtung A relativ verschiebbar ist. Hierdurch ist der Abstand 39, mit dem die Kugel des Kugeldruckstifts 36 in den Längsschlitz 7 eingreift, veränderbar, wodurch die Druckkraft erhöht oder aber verringert werden kann, die benötigt wird, um das stehende Kettenglied 19 entgegen der formschlüssigen Sicherung durch den Kugeldruckstift 36 aus dem Längsschlitz 7 heraus zu bewegen.

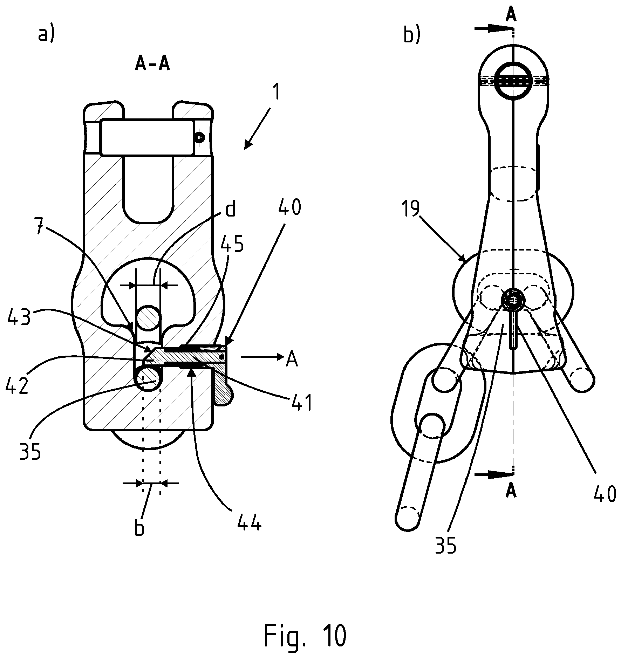

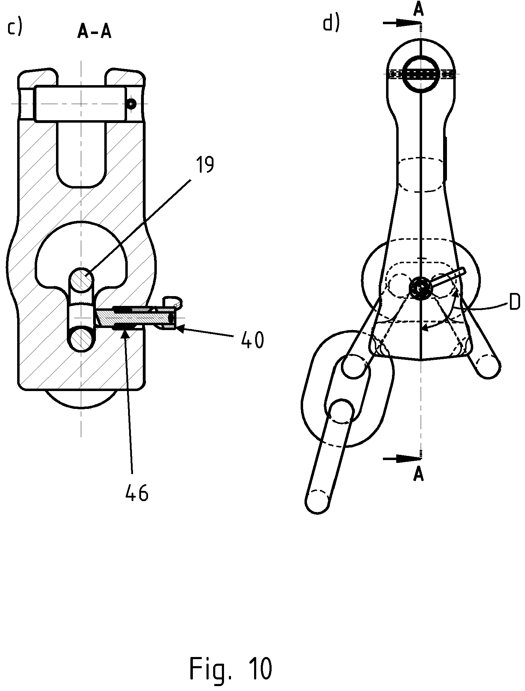

Figur 10a und b zeigen eine Ausführungsvariante des erfindungsgemäßen Kettenverkürzungselements 1 mit einem Sperrhebel 40 in einer Schnittansicht, sowie in einer Seitenansicht in einer Sperrstellung. Figur 10c und d zeigen den Sperrhebel 40 in einer Öffnungsstellung.

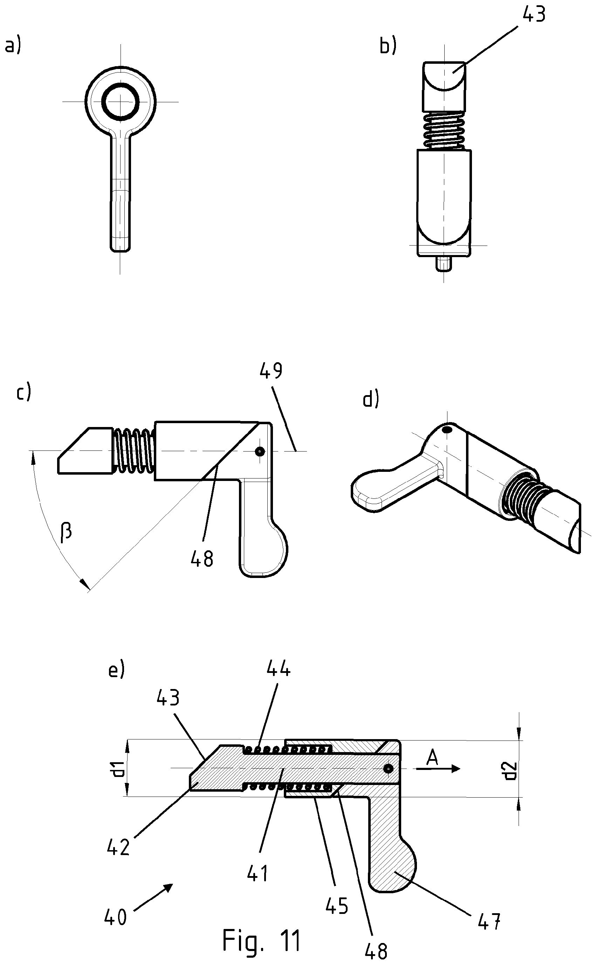

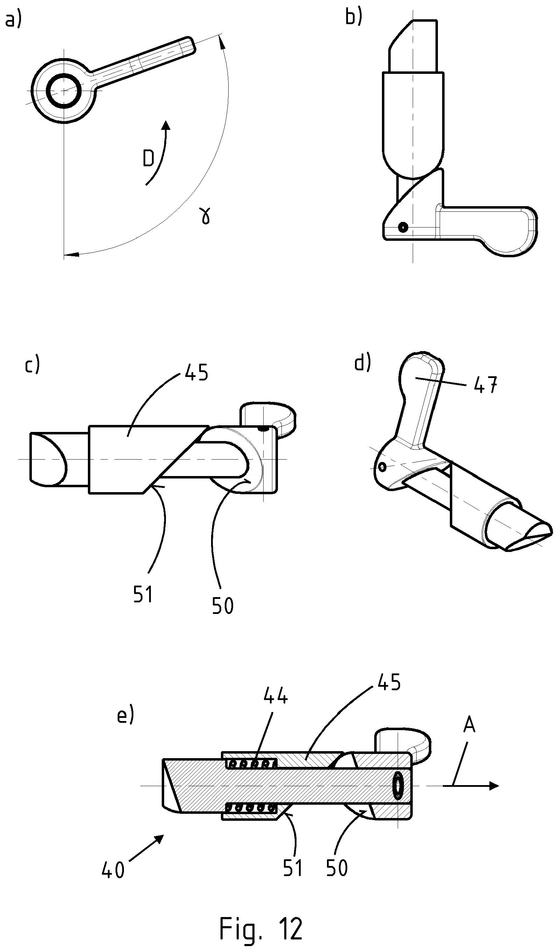

Der Sperrhebel 40 ist näher ebenfalls noch einmal in einer Sperrstellung dargestellt in der Figur 11a bis e und in der Figur 12a bis e hierzu korrespondierend in einer Offenstellung. Der Sperrhebel 40 ist dabei durch einen Sperrstift 41 ausgebildet, wobei am Ende des Sperrstifts 41 ein Sperrfortsatz 42 ausgebildet ist. Der Sperrfortsatz 42 selber weist eine abgeschrägte Fläche 43 auf, so dass der Schenkel 35 des in den Längsschlitz 7 einzuführenden stehenden Kettenglieds 19 bei Passieren der abgeschrägten Fläche 43 den Sperrstift 41 in Axialrichtung A nach außen entgegengesetzt der Federkraft einer Druckfeder 44 drückt. Nach Passieren des Sperrfortsatzes 42 durch den Schenkel 35 fährt der Sperrstift 41 in entgegengesetzter axialer Richtung zurück in die Sperrstellung gemäß Figur 11 bzw. 10a und b. Hierbei greift der Sperrfortsatz 42 in den Längsschlitz 7 mit einem Abstand b ein, wobei der Abstand b zwischen 40 und 70 %, insbesondere zwischen 50 und 65 % des Durchmessers d des Längsschlitzes 7 beträgt.

Ferner ist der Sperrstift 41 in einer Hülse 45 geführt, wobei die Hülse 45 in eine Bohrung 46 gemäß Figur 10a bzw. 10c einführbar ist. Insbesondere wird die Hülse 45 in dieser Bohrung 46 formschlüssig mit einem Presssitz lagefixiert. Hierzu weist die Hülse 45 einen Durchmesser d1 auf, der mit dem Durchmesser der Bohrung 46 einen entsprechend benannten Presssitz ausbildet. An dem Sperrfortsatz 42 gegenüberliegenden Ende des Sperrstifts 41 ist ferner ein Betätigungshebel 47 angeordnet, wobei der Betätigungshebel 47 den Sperrstift 41 zumindest abschnittsweise formschlüssig umgreift. Hierzu weist der Betätigungshebel 47 ebenfalls einen Durchmesser d2 auf, wobei der Durchmesser d2 kleiner ist als der Durchmesser d1 der Hülse 45. Hierdurch kommt es zu keinem Verkanten innerhalb der Bohrung 46 des Betätigungshebels 47, der gemäß Figur 10a in der Geschlossenstellung zumindest teilweise in die Bohrung 46 eingreift.

Die Hülse 45 sowie der Betätigungshebel 47 liegen in einer Kontaktebene 48 formschlüssig in der Sperrstellung aneinander an. Die Kontaktebene 48 ist dabei in einem Winkel β von im Wesentlichen 30 bis 60° und insbesondere 45° zu einer Mittellängsachse 49 des Sperrstifts 41 angeordnet. Durch eine Drehbewegung D verschiebt sich somit die Kontaktfläche 50 des Betätigungshebels 47 relativ zu der Kontaktfläche 51 der Hülse 45, wodurch der Sperrstift 41 in Axialrichtung A aus dem Bereich des Längsschlitzes 7 gemäß Figur 10c herausgezogen wird. Das stehende Kettenglied 19 kann somit ohne Einfluss einer Sicherungseinrichtung aus dem Längsschlitz 7 entnommen werden.

Im Rahmen der Erfindung ist es ferner möglich, die Drehbewegung D auf einen Winkelbereich γ derart zu begrenzen, dass ein weiteres Drehen des Betätigungshebels 47 nicht möglich ist. Beispielsweise wird hierzu schematisch angedeutet gemäß Figur 12e die Druckfeder 44 auf Block gefahren, so dass ein weiteres Verschieben des Sperrstifts 41 in Axialrichtung A nicht ermöglicht wird. Sobald der anwendende Monteur den Betätigungshebel 47 loslässt, wird der Sperrstift 41 in Axialrichtung A in den Längsschlitz 7 eingreifend aufgrund der Federkrafteinwirkung zurückgefahren.

### Bezugszeichen:

1 - Kettenverkürzungselement
2 - Kopfabschnitt
3 - Mittelabschnitt
4 - Kettenaufnahmeabschnitt
5 - Doppelgabel
6 - Öffnung
7 - Längsschlitz
8 - Tal zu 7
9 - Stütznocken
10 - Vorderseite
11 - Ausnehmung
12 - Tasche
13- Aufnahmemulde
14 - Kette
15- Verbindungsbolzen
16- Anschlagkette
17- Ringgabel
18 - Aufhängeglied
19 - stehendes Kettenglied
20 - liegendes Kettenglied
21 - stehendes Kettenglied
22 - Mittellängsebene zu 1
23 - Sicherungsbolzen
24 - Querschnittsdurchmesser
25 - H-förmiger Doppelgabelkopf
26 - zu verkürzender Teil der Kette
27- Griff
28 - Sicherungsfuß
29 - Schafft zu 27
30 - Hülse
31 - Spiel
32 - Feder
33 - Außenmantelfläche von 30
34 - Montageöffnung
35- Schenkel zu 19
36 - Kugeldruckstift
37 - Bohrung
38 - Seitenschenkel zu 1
39 - Abstand
40 - Sperrhebel
41 - Sperrstift
42 - Sperrfortsatz
43 - Fläche
44 - Druckfeder
45 - Hülse
46 - Bohrung
47 - Betätigungshebel
48 - Kontaktebene
49 - Mittellängsachse zu 41
50 - Kontaktfläche zu 47
51 - Kontaktfläche zu 45

F - Federkraft
Z - Zugrichtung
α - Winkel
a - Abstand
d - Durchmesser
d1 - Durchmesser zu 45
d2 - Durchmesser zu 47
b - Abstand
D - Drehbewegung
A - Axialrichtung
β - Winkel

## Patentansprüche

1. Kettenverkürzungselement (1) für Gliederketten aufweisend einen Kopfabschnitt (2), einen Mittelabschnitt (3) und einen Kettenaufnahmeabschnitt (4), wobei in dem Mittelabschnitt (3) eine Öffnung (6) zur Durchführung einer Kette (14) vorgesehen ist und sich von der Öffnung (6) aus ein Längsschlitz (7) in den Kettenaufnahmeabschnitt (4) erstreckt, wobei ein stehendes Kettenglied (19) mit seinen Schenkeln (35) in den Längsschlitz (7) einführbar ist und in einem Tal (8) des Längsschlitzes (7) ein Stütznocken (9) ausgebildet ist, wobei der Stütznocken (9) im Gebrauch das stehende Kettenglied (19) abstützt und **dadurch gekennzeichnet, dass** auf mindestens einer Seite in dem Kettenaufnahmeabschnitt (4) eine Tasche (12) zur zumindest teilweisen Aufnahme eines liegenden Kettengliedes (20) angeordnet ist und der Stütznocken (9) mit einem Abstand (a) in die Tasche (12)
hineinragend ausgebildet ist, wobei der Abstand (a) mindestens dem halben Querschnittsdurchmesser (24) eines Kettengliedes (19, 20) entspricht und in den Längsschlitz (7) ein Sicherungsmittel hineinragend ausgebildet ist, wobei das Sicherungsmittel im Gebrauch einen Schenkel (35) des stehenden Kettengliedes (19)
zumindest bereichsweise übergreift.

2. Kettenverkürzungselement nach Anspruch 1, **dadurch gekennzeichnet, dass** das Sicherungsmittel als federnd gelagerte Kugel ausgebildet ist, wobei die Kugel zumindest abschnittsweise in den Längsschlitz (7) hineinragt und zum Einlegen des stehenden Kettengliedes (19) in den Längsschlitz (7) entgegen einer Federkraft in Richtung eines Seitenschenkels (38) des Kettenaufnahmeabschnittes (4) bewegbar ist, insbesondere ist auf den gegenüberliegenden, den Längsschlitz (7) ausbildenden Seitenschenkeln (38) jeweils mindestens eine Kugel als Sicherungsmittel angeordnet.

3. Kettenverkürzungselement nach Anspruch 1 oder 2, **dadurch gekennzeichnet, dass** die auf die Kugel ausgeübte Federkraft einstellbar ist, insbesondere ist das Sicherungsmittel als Kugeldruckstift (36) ausgebildet.

4. Kettenverkürzungselement nach einem der Ansprüche 1 bis 3, **dadurch gekennzeichnet, dass** das Sicherungsmittel als Sperrhebel (40) ausgebildet ist, wobei ein Sperrfortsatz (42) des Sperrhebels (40) in den Längsschlitz (7) hineinragt, insbesondere ragt der Sperrfortsatz (42) 40% bis 70%, insbesondere 50% bis 65% die Breite des Längsschlitzes (7) überdeckend hinein.

5. Kettenverkürzungselement nach Anspruch 4, **dadurch gekennzeichnet, dass** der Sperrhebel (40) federnd in einem Seitenschenkel (38) gelagert ist, insbesondere in einer Hülse (45), wobei die Hülse (45) formschlüssig in eine Bohrung (37) des Seitenschenkels (38) eingesetzt ist.

6. Kettenverkürzungselement nach einem der Ansprüche 4 oder 5, **dadurch gekennzeichnet, dass** der Sperrhebel (40) in einer Sicherungsstellung durch das Einführen des stehenden Kettengliedes (19) zurückbewegt wird, bis ein Schenkel (35) den Sperrfortsatz (42) passiert hat, woraufhin der Sperrhebel (40) aufgrund der Federkraft wieder zurück in die Sperrstellung überführbar ist.

7. Kettenverkürzungselement nach einem der Ansprüche 4 bis 6, **dadurch gekennzeichnet, dass** der Sperrfortsatz (42) abgeschrägt ist.

8. Kettenverkürzungselement nach einem der Ansprüche 5 bis 7, **dadurch gekennzeichnet, dass** die Hülse (45) und der Sperrhebel (40) formschlüssig aneinander liegen, wobei eine Kontaktebene (48) in einem Winkel β zwischen 30 und 60 Grad, insbesondere von in einem Winkel β von 45 Grad zu einer Mittellängsachse (49) des Sperrhebels (40) angeordnet ist, so dass durch ein Verdrehen des Sperrhebels (40) gegenüber der Hülse (45) der Sperrfortsatz (42) in Axialrichtung (A) aus dem Längsschlitz (7) herausbewegt wird.

9. Kettenverkürzungselement nach einem der vorstehenden Ansprüche, **dadurch gekennzeichnet, dass** der Stütznocken (9) spiegelsymmetrisch an einer Vorderseite (10) und einer Rückseite ausgebildet ist.

10. Kettenverkürzungselement nach einem der vorstehenden Ansprüche, **dadurch gekennzeichnet, dass** die Tasche (12) in einem Winkel zwischen 10 und 20 Grad, insbesondere zwischen 13 und 17 Grad und bevorzugt 15 Grad zu einer Mittellängsebene (22) des Kettenverkürzungselementes (1) angeordnet ist.

11. Kettenverkürzungselement nach einem der vorstehenden Ansprüche, **dadurch gekennzeichnet, dass** in dem Längsschlitz (7) ein Sicherungsbolzen (23) zum Eingriff kommend angeordnet ist, wobei der Sicherungsbolzen (23) insbesondere über die Federkraft (F) eines Federmittels in seiner Sicherungsposition gehalten ist.

12. Kettenverkürzungselement nach einem der vorstehenden Ansprüche, **dadurch gekennzeichnet, dass** der Mittelabschnitt (3) sich zu dem Kettenaufnahmeabschnitt (4) in Querschnittsansicht fächerartig erstreckt.

13. Kettenverkürzungselement nach einem der vorstehenden Ansprüche, **dadurch gekennzeichnet, dass** an den Rändern des Längsschlitzes (7) Ausnehmungen (11) ausgebildet sind.

14. Kettenverkürzungselement nach einem der vorstehenden Ansprüche, **dadurch gekennzeichnet, dass** der Abstand (a) mindestens dem Querschnittsdurchmesser (24) eines Kettengliedes (19, 20) entspricht.

15. Kettenverkürzungselement nach einem der vorstehenden Ansprüche, **dadurch gekennzeichnet, dass** unterhalb des Stütznockens (9) eine Aufnahmemulde (13) ausgebildet ist, wobei die Aufnahmemulde (13) das auf das in der Tasche (12) liegende Kettenglied (20) folgende stehende Kettenglied (19) zumindest mit einem Außenradius aufnimmt.

16. Kettenverkürzungselement nach einem der vorstehenden Ansprüche, **dadurch gekennzeichnet, dass** der Kopfabschnitt (2) als Kettenaufnahmeabschnitt (4) ausgebildet ist oder dass in dem Kopfabschnitt (2) ein Anbindungsbereich zum Koppeln mit einer Kette (14) ausgebildet ist.

## Claims

1. Chain-shortening element (1) for link chains, comprising a head section (2), a middle section (3) and a chain-receiving section (4), wherein an opening (6) for passing through a chain (14) is provided in the middle section (3) and extends from the opening (6) out of a longitudinal slot (7) into the chain-receiving section (4), wherein an upright chain link (19) can be introduced with its legs (35) into the longitudinal slot (7) and a supporting cam (9) is formed in a valley (8) of the longitudinal slot (7), wherein, during use, the supporting cam (9) supports the upright chain link (19) and **characterised in that** a pocket (12) for at least partially receiving a horizontal chain link (20) is arranged in the chain-receiving section (4) on at least one side and the supporting cam (9) is formed so as to project into the pocket (12) with a spacing (a), wherein the spacing (a) corresponds to at least half the cross-sectional diameter (24) of a chain link (19, 20) and a securing means is formed so as to project into the longitudinal slot (7), wherein, during use, the securing means overlaps a leg (35) of the upright chain link (19) at least in certain sections.

2. Chain-shortening element according to claim 1, **characterised in that** the securing means is formed as a resiliently mounted ball, wherein the ball projects into the longitudinal slot (7) at least in certain sections and for insertion of the upright chain link (19) can be moved into the longitudinal slot (7), counter to a spring force, in the direction of a side leg (38) of the chain-receiving section (4), in particular at least one ball respectively is arranged as the securing means on the opposing side legs (38) forming the longitudinal slot (7).

3. Chain-shortening element according to claim 1 or 2, **characterised in that** the spring force exerted on the ball can be adjusted, in particular the securing means is formed as a ball pressure pin (36).

4. Chain-shortening element according to any one of claims 1 to 3, **characterised in that** the securing means is formed as a locking lever (40), wherein a locking projection (42) of the locking lever (40) projects into the longitudinal slot (7), in particular the locking projection (42) projects so as to cover 40% to 70%, in particular 50% to 65%, of the width of the longitudinal slot (7).

5. Chain-shortening element according to claim 4, **characterised in that** the locking lever (40) is resiliently mounted in a side leg (38), in particular in a sleeve (45), wherein the sleeve (45) is inserted into a hole (37) in the side leg (38) with interlocking fit.

6. Chain-shortening element according to either of claims 4 or 5, **characterised in that** in a securing position the locking lever (40) is moved back by the introduction of the upright chain link (19) until a leg (35) has passed the locking projection (42), whereupon the locking lever (40) can be transferred back into the locking position as a result of the spring force.

7. Chain-shortening element according to any one of claims 4 to 6, **characterised in that** the locking projection (42) is bevelled.

8. Chain-shortening element according to any one of claims 5 to 7, **characterised in that** the sleeve (45) and the locking lever (40) rest on each other with interlocking fit, wherein a contact plane (48) is arranged at an angle β between 30 and 60 degrees, in particular at an angle β of 45 degrees to a middle longitudinal axis (49) of the locking lever (40), so turning the locking lever (40) with respect to the sleeve (45) moves the locking projection (42) out of the longitudinal slot (7) in the axial direction (A).

9. Chain-shortening element according to any one of the preceding claims, **characterised in that** the supporting cam (9) is formed mirror symmetrically on a front side (10) and a back side.

10. Chain-shortening element according to any one of the preceding claims, **characterised in that** the pocket (12) is arranged at an angle between 10 and 20 degrees, in particular between 13 and 17 degrees and preferably 15 degrees to a middle longitudinal plane (22) of the chain-shortening element (1).

11. Chain-shortening element according to any one of the preceding claims, **characterised in that** a securing pin (23) is arranged so as to engage in the longitudinal slot (7), wherein the securing pin (23) is held in its securing position in particular by the spring force (F) of a spring means.

12. Chain-shortening element according to any one of the preceding claims, **characterised in that** in a cross-sectional view the middle section (3) extends to the chain-receiving section (4) in the manner of a fan.

13. Chain-shortening element according to any one of the preceding claims, **characterised in that** recesses (11) are arranged at the edges of the longitudinal slot (7).

14. Chain-shortening element according to any one of the preceding claims, **characterised in that** the spacing (a) corresponds at least to the cross-sectional diameter (24) of a chain link (19, 20).

15. Chain-shortening element according to any one of the preceding claims, **characterised in that** a receiving trough (13) is formed below the supporting cam (9), wherein the receiving trough (13) receives the upright chain link (19) that follows the horizontal chain link (20) in the pocket (12) at least with an external radius.

16. Chain-shortening element according to any one of the preceding claims, **characterised in that** the head section (2) is formed as a chain-receiving section (4) or that a connection region for coupling to a chain (14) is formed in the head section (2).

## Revendications

1. Élément de raccourcissement de chaîne (1) pour chaînes à maillons présentant une section de tête (2), une section médiane (3) et une section de réception de chaîne (4), dans lequel une ouverture (6) est prévue dans la section médiane (3) pour le passage d'une chaîne (14) et une fente longitudinale (7) s'étend de l'ouverture (6) dans la section de réception de chaîne (4), dans lequel un maillon de chaîne vertical (19) peut être introduit avec ses branches (35) dans la fente longitudinale (7) et une came d'appui (9) est réalisée dans une vallée (8) de la fente longitudinale (7), dans lequel la came d'appui (9) soutient, en utilisation, le maillon de chaîne vertical (19) et **caractérisé en ce qu'**une poche (12) pour la réception au moins partielle d'un maillon de chaîne horizontal (20) est agencée sur au moins un côté dans la section de réception de chaîne (4) et
la came d'appui (9) est réalisée en faisant saillie dans la poche (12) avec une distance (a), dans lequel la distance (a) correspond au moins à la moitié du diamètre en coupe transversale (24) d'un maillon de chaîne (19, 20) et un moyen de blocage est réalisé en faisant saillie dans la fente longitudinale (7), dans lequel le moyen de blocage chevauche au moins par zone, en utilisation, une branche (35) du maillon de chaîne vertical (19).

2. Élément de raccourcissement de chaîne selon la revendication 1, **caractérisé en ce que** le moyen de blocage est réalisé sous forme de bille logée de manière élastique, dans lequel la bille fait saillie au moins par section dans la fente longitudinale (7) et peut être mobile pour l'insertion du maillon de chaîne vertical (19) dans la fente longitudinale (7) contre une force élastique en direction d'une branche latérale (38) de la section de réception de chaîne (4), en particulier respectivement au moins une bille est agencée comme moyen de blocage sur les branches latérales (38) opposées, formant la fente longitudinale (7).

3. Élément de raccourcissement de chaîne selon la revendication 1 ou 2, **caractérisé en ce que** la force élastique exercée sur la bille est réglable, en particulier le moyen de blocage est réalisé sous forme de tige de pression à bille (36).

4. Élément de raccourcissement de chaîne selon l'une quelconque des revendications 1 à 3, **caractérisé en ce que** le moyen de blocage est réalisé sous forme de levier d'arrêt (40), dans lequel un prolongement d'arrêt (42) du levier d'arrêt (40) fait saillie dans la fente longitudinale (7), en particulier le prolongement d'arrêt (42) fait saillie en recouvrant 40 % à 70 %, en particulier 50 % à 65 % de la largeur de la fente longitudinale (7).

5. Élément de raccourcissement de chaîne selon la revendication 4, **caractérisé en ce que** le levier d'arrêt (40) est logé de manière élastique dans une branche latérale (38), en particulier dans une douille (45), dans lequel la douille (45) est insérée par complémentarité de forme dans un perçage (37) de la branche latérale (38).

6. Élément de raccourcissement de chaîne selon l'une quelconque des revendications 4 ou 5, **caractérisé en ce que** le levier d'arrêt (40) dans une position de blocage est déplacé en arrière par l'introduction du maillon de chaîne vertical (19), jusqu'à ce qu'une branche (35) ait passé le prolongement d'arrêt (42), à la suite de quoi le levier d'arrêt (40) peut être ramené dans la position de blocage en raison de la force élastique.

7. Élément de raccourcissement de chaîne selon l'une quelconque des revendications 4 à 6, **caractérisé en ce que** le prolongement d'arrêt (42) est chanfreiné.

8. Élément de raccourcissement de chaîne selon l'une quelconque des revendications 5 à 7, **caractérisé en ce que** la douille (45) et le levier d'arrêt (40) sont posés l'un contre l'autre par complémentarité de forme, dans lequel un plan de contact (48) est agencé dans un angle ß entre 30 et 60 degrés, en particulier dans un angle ß de 45 degrés par rapport à un axe longitudinal médian (49) du levier d'arrêt (40) si bien que le prolongement d'arrêt (42) est déplacé hors de la fente longitudinale (7) par une rotation du levier d'arrêt (40) par rapport à la douille (45) dans la direction axiale (A).

9. Élément de raccourcissement de chaîne selon l'une quelconque des revendications précédentes, **caractérisé en ce que** la came d'appui (9) est réalisée en symétrie de miroir au niveau d'un côté avant (10) et d'un côté arrière.

10. Élément de raccourcissement de chaîne selon l'une quelconque des revendications précédentes, **caractérisé en ce que** la poche (12) est agencée dans un angle entre 10 et 20 degrés, en particulier entre 13 et 17 degrés et de préférence 15 degrés par rapport à un plan longitudinal médian (22) de l'élément de raccourcissement de chaîne (1).

11. Élément de raccourcissement de chaîne selon l'une quelconque des revendications précédentes, **caractérisé en ce qu'**un boulon de blocage (23) est agencé venant en prise dans la fente longitudinale (7), dans lequel le boulon de blocage (23) est maintenu dans sa position de blocage en particulier via la force élastique (F) d'un ressort.

12. Élément de raccourcissement de chaîne selon l'une quelconque des revendications précédentes, **caractérisé en ce que** la section médiane (3) s'étend en éventail dans la vue en coupe transversale vers la section de réception de chaîne (4).

13. Élément de raccourcissement de chaîne selon l'une quelconque des revendications précédentes, **caractérisé en ce que** des évidements (11) sont réalisés aux bords de la fente longitudinale (7).

14. Élément de raccourcissement de chaîne selon l'une quelconque des revendications précédentes, **caractérisé en ce que** la distance (a) correspond au moins au diamètre en coupe transversale (24) d'un maillon de chaîne (19, 20).

15. Élément de raccourcissement de chaîne selon l'une quelconque des revendications précédentes, **caractérisé en ce qu'**une auge de réception (13) est réalisée sous la came d'appui (9), dans lequel l'auge de réception (13) reçoit le maillon de chaîne vertical (19) suivant le maillon de chaîne horizontal (20) dans la poche (12) au moins avec un rayon extérieur.

16. Élément de raccourcissement de chaîne selon l'une quelconque des revendications précédentes, **caractérisé en ce que** la section de tête (2) est réalisée sous forme de section de réception de chaîne (4) ou **en ce qu'**une zone de liaison est réalisée dans la section de tête (2) pour le couplage avec une chaîne (14).
